# NEUE EUROPÄISCHE PATENTSCHRIFT

(11) **EP 1 243 871 B2**
(45) Veröffentlichungstag und Bekanntmachung des Hinweises auf die Entscheidung über den Einspruch: **24.02.2016**
(45) Hinweis auf die Patenterteilung: 26.09.2012
(21) Anmeldenummer: 02005449.0
(22) Anmeldetag: 08.03.2002
(51) Int. Cl.: F24H 9/20, G05D 23/19, G08C 25/02

(54) **Verfahren und Vorrichtung zum Einstellen des Werts einer Betriebsvorgabe eines Heisswasserbereiters**
Method and device for adjusting a set point of a hot water boiler
Méthode et appareil pour adjuster la valeur de consigne d'une chaudiére

(30) Priorität: 23.03.2001 DE 10114194
(43) Veröffentlichungstag der Anmeldung: 25.09.2002
(73) Patentinhaber: BSH Hausgeräte GmbH, 81739 München (DE)
(72) Erfinder: Helminger, Markus, Dipl.-Ing.(TU), 83313 Siegsdorf (DE)

(56) Entgegenhaltungen:
- EP-A- 0 529 316
- EP-A- 0 635 812
- EP-A- 1 028 361
- EP-A1- 0 529 316
- EP-A1- 0 635 812
- EP-A1- 1 014 326
- EP-A2- 0 129 794
- WO-A1-00/56016
- WO-A1-01/06978
- WO-A1-93/15486
- DE-A- 3 927 838
- DE-A- 4 101 982
- DE-A- 19 652 130
- DE-A1- 3 322 729
- DE-A1- 3 508 562
- DE-A1- 3 617 782
- DE-A1- 4 101 982
- DE-A1- 4 114 448
- DE-A1- 4 128 974
- DE-A1- 4 312 608
- DE-A1- 19 503 720
- GB-A- 2 175 724
- JP-A- H06 189 373
- JP-A- H07 226 981
- JP-A- H09 159 268
- US-A- 5 446 453

## Beschreibung

Die vorliegende Erfindung betrifft ein Verfahren zum Einstellen des Werts einer Betriebsvorgabe eines Heißwasserbereiters mittels einer insbesondere drahtlosen Fernbedienung sowie eine Fernbedienung zur Durchführung eines solchen Verfahrens.

Es ist bekannt, Heißwasserbereitern insbesondere für den Einsatz in einem Haushalt Fernbedienungen zuzuordnen, um die Betriebsvorgaben des Heißwasserbereiters auch von einem anderen Ort aus verändern zu können. Dies ist beispielsweise in den Fällen vorteilhaft, in denen der Heißwasserbereiter an einem abgelegenen Ort des Haushalts angeordnet ist und die Betriebsvorgaben aus der Entfernung und insbesondere von den Zapfstellen aus veränderbar sein sollen, so dass sich der Komfort für einen Benutzer erhöht. Betriebsvorgaben sind beispielsweise die Solltemperatur für das Heißwasser, Grenzwerte für die Wassertemperatur oder den Verbrauch, die Einstellungen einer Zeitschaltuhr oder auch das Ein- und Ausschalten des Heißwasserbereiters.

Durch die EP 1028361 A1 ist ein Heißwasserbereiter mit zugeordneter Fernbedienung bekannt, bei dem der Benutzer an der Fernbedienung einen Wert für die Solltemperatur einstellen kann, wobei der eingegebene Wert von der Fernbedienung angezeigt, gespeichert und von einem Prozessor mit Hilfe einer serieller Datenübertragungseinrichtung zum Heißwasserbereiter übertragen wird. Nachteiligerweise erhält der Benutzer keine Rückmeldung, ob der von ihm eingestellte Wert tatsächlich zum Heißwasserbereiter übertragen wurde und für den weiteren Betrieb wirksam ist. Zusätzlich wird dem Benutzer der von ihm eingestellte Wert angezeigt und damit das Gefühl vermittelt, er habe die Solltemperatur verändert, so dass der Benutzer im Fall Übertragungsfehlern von einem falschen Wert ausgeht.

Weiterhin ist durch die gattungsbildende US 5,446,453 ein Warmwasserbereiter mit zugeordneter Fernbedienung bekannt, bei dem eine an der Fernbedienung eingestellte Solltemperatur per Funk an den Heißwasserbereiter übertragen wird, wobei zur Vermeidung von Übertragungsfehlern den zu übertragenden Werten ein Fehlerkontrollsignal hinzugefügt wird. Die Korrektheit der Datenübertragung wird somit auf Steuerungsebene überwacht, wobei nachteiligerweise keine Rückmeldung über den Erfolg der Übertragung an den Benutzer erfolgt und für die Fehlerüberwachung einen erhöhter Aufwand erforderlich ist.

Das Dokument US 5 446 453 offenbart den Oberbegriff des Anspruchs 1.

In beiden vorgenannten Fällen besteht für den Benutzer die Gefahr einer verringerten Betriebssicherheit. Wenn aufgrund eines Defekts oder einer gestörten Verbindung der Benutzer eine Einstellhandlung vornimmt, die von der Fernbedienung quittiert, jedoch nicht zum Heißwasserbereiter übertragen und dort wirksam wird, kann der Fall eintreten, dass der Benutzer von einer falschen Betriebsvorgabe ausgeht. Geht in einem solchen Fall der Benutzer beispielsweise von einer niedrigeren Solltemperatur aus, als sie tatsächlich beim Heißwasserbereiter eingestellt ist, kann es zu Verbrühungen kommen.

Der vorliegenden Erfindung liegt die Aufgabe zugrunde, ein Verfahren zum Einstellen des Werts einer Betriebsvorgabe beziehungsweise einen Heißwasserbereiter bzw. eine Fernbedienung der eingangs genannten Art zu schaffen, mit denen mit geringem Aufwand dem Benutzer eine einfache und sinnfällige Rückmeldung über den Erfolg seiner Einstellhandlung gegeben und die Betriebssicherheit erhöht wird.

Erfindungsgemäß wird diese Aufgabe durch ein Verfahren mit den Merkmalen des Patentanspruchs 1 bzw. durch einen Heißwasserbereiter bzw. eine Fernbedienung mit den Merkmalen des Patentanspruchs 9.

Durch die Rückübertragung des bei dem Heißwasserbereiter hinterlegten Werts für eine Betriebsvorgabe wird für den Benutzer die Sicherheit erhöht, dass tatsächlich die aktiven bzw. dessen Betrieb zugrundeliegenden Werte der Betriebsvorgaben angezeigt werden. Kann der Heißwasserbereiter das Einstellsignal aufgrund einer fehlerhaften Signalübertragung nicht empfangen, erfolgt keine Rückmeldung vom Heißwasserbereiter an die Fernbedienung, so dass der Benutzer in einem solchen Fall den Übertragungsfehler feststellen wird. Der Benutzer erhält dadurch bei geringem Aufwand eine zuverlässige Rückmeldung über den Erfolg seiner Einstellhandlung.

Dabei wird die Sicherheit auch dadurch erhöht, dass dann, wenn von der Fernbedienung für eine Betriebsvorgabe, für die eine bestimmte Zeit lang kein Wert vom Heißwasserbereiter empfangen wurde, kein Wert oder eine Fehlermeldung angezeigt wird, wobei der Heißwasserbereiter in regelmäßigen Abständen von selbst den aktuellen Wert einer Betriebsvorgabe sendet. In beiden Fällen wird der von der Fernbedienung angezeigt Wert in der Fernbedienung zwischengespeichert, bis eine neuer Wert angezeigt wird.

Wenn auch die Steuereinrichtung der Fernbedienung anhand des Einstellsignals den neuen Wert ermittelt und anzeigt, bis der vom Heißwasserbereiter ausgesendete Wert empfangen wurde, wird erreicht, dass die Fernbedienung sofort die Einstellhandlung quittiert. Dabei wird kein Wert oder eine Fehlermeldung angezeigt, wenn während einer bestimmten Zeitdauer nach dem Senden des Einstellsignals an den Heißwasserbereiter kein Wert vom Heißwasserbereiter empfangen wird. Da die Reaktionszeit in der Regel sehr kurz sein wird, kann diese Zeitdauer sehr kurz bemessen werden, beispielsweise einige ms lang, so dass der Benutzer sofort erfährt, ob seine Einstellhandlung erfolgreich war. Es wird somit ein Fail-Safe-Verhalten erreicht, das auch bei einem Defekt des Übertragungsweges die Anzeige eines irreführenden Werts ausschließt.

Wenn eine anzuzeigende Fehlermeldung von der Anzeige anstatt des Werts angezeigt wird, muss für die Rückmeldung einer Störung an den Benutzer keine zusätzliche Anzeigemöglichkeit vorgesehen werden, wie beispielsweise ein zusätzliches Leuchtmittel oder ein zusätzliches Segment in einer Anzeige, die den Benutzer verwirren könnte. Die Anzeige kann dadurch übersichtlicher gestaltet werden und es kann für die Fernbedienung eine handelsübliche Anzeige, wie beispielsweise eine mehrstellige Sieben-Segment-Anzeige, verwendet werden.

Gleichzeitig werden die Anforderungen an eine Speichereinrichtung der Steuereinrichtung der Fernbedienung verringert, da der letzte Wert einer Betriebsvorgabe nicht in einem nichtflüchtigen Speicher gespeichert werden muss, um nach einem Wiedereinschalten der Fernbedienung angezeigt werden zu können, da der aktuelle Wert ohnehin von der Steuereinrichtung des Heißwasserbereiters übertragen wird. Sendet die Fernbedienung nach ihrem Einschalten ein entsprechendes Anforderungssignal an den Heißwasserbereiter, kann sofort eine aktuelle Anzeige erreicht werden, ohne dass auf die nächste Einstellhandlung oder eine sich wiederholende automatische Übertragung des aktuellen Werts seitens der Steuereinrichtung des Heißwasserbereiters gewartet werden muss.

Zum Einstellen des Werts einer Betriebsvorgabe können von der Steuereinrichtung der Fernbedienung auch Signale zur Erhöhung oder Erniedrigung des aktuellen Werts der Betriebsvorgabe in der Steuereinrichtung des Heißwasserbereiters gesendet werden. In diesem Fall ist für die Datenübertragungseinrichtungen ein geringerer Aufwand erforderlich, da es genügen kann, wenn einfache Schaltsignale mit dem alleinigen Informationsinhalt Ein übertragen werden, die den Funktionen Erniedrigen bzw. Erhöhen und im Fall von mehreren fernzubeeinflussenden Betriebsvorgaben einer bestimmten Betriebsvorgabe zugeordnet werden können. Sobald die Steuereinrichtung des Heißwasserbereiters ein solches Schaltsignal empfängt, wird dieses der entsprechenden Betriebsvorgabe und der entsprechenden Funktion zugeordnet und der zugehörige Wert solange erhöht bzw. erniedrigt wie die Steuereinrichtung der Fernbedienung das Schaltsignal aussendet bzw. der Benutzer die entsprechende Taste gedrückt hält. Gleichzeitig sendet die Steuereinrichtung des Heißwasserbereiters ständig den aktualisierten Wert der Betriebsvorgabe an die Steuereinrichtung der Fernbedienung, die diesen Wert anzeigt. Die Geschwindigkeit, mit der ein aktueller Wert erhöht bzw. erniedrigt wird, ist vorteilhafterweise so eingestellt, dass es bei einer Einstellhandlung nicht zu einem Überschwingen des Werts aufgrund von Verzögerungszeiten bei der Datenübertragung und der nicht zu vermeidenden Reaktionszeit des Benutzers kommt.

Daneben können jedoch auch ein Einstellsignal gesendet werden, das den neuen Wert für eine Betriebsvorgabe beschreibt. Auf diese Weise ist es beispielsweise möglich, den Wert einer Betriebsvorgabe mit nahezu beliebiger Genauigkeit einzustellen. Dabei kann das Einstellsignal durch direkte Eingabe eines Wert oder die Eingabe von Signalen zum Erhöhen bzw. Erniedrigen des gerade angezeigten Wert erzeugt werden.

Wenn der Wert einer Betriebsvorgabe über verschiedene Wege eingestellt werden kann, beispielsweise mit Hilfe einer weiteren Fernbedienung und/oder von Eingabemitteln des Heißwasserbereiters kann vorgesehen sein, dass die Steuereinrichtung des Heißwasserbereiters den aktuellen Wert einer Betriebsvorgebe nach einer Einstellhandlung unabhängig davon eingestellt und zur Fernbedienung sendet, wo die Einstellhandlung vorgenommen wurde.

Vorteilhafterweise ist jedoch in der Steuereinrichtung des Heißwasserbereiters eine Vorrangbehandlung vorgesehen, die die Veränderung der Werts einer Betriebsvorgabe in Abhängigkeit davon regelt, ob die Einstellsignale von der Steuereinrichtung der Fernbedienung gesendet oder mittels Eingabemittel des Heißwasserbereiters erzeugt wurden. Bei dieser Vorrangbehandlung kann weiterhin berücksichtigt werden, wie viel Zeit seit dem letzten Zapfvorgang vergangen ist, d.h. wie lange dem Heißwasserbereiter kein heißes Wasser entnommen worden ist. Auf diese Weise kann die Betriebssicherheit insbesondere in den Fällen erhöht werden, in denen der Wert einer Betriebsvorgabe auch von anderen Benutzern verändert werden kann.

Beispielsweise kann als Vorrangbehandlung vorgesehen sein, dass eine Änderung nur mittels der Fernbedienung oder der Eingabemittel des Heißwasserbereiters möglich ist, oder dass eine Änderung mittels der Fernbedienung immer und mittels der Eingabemittel des Heißwasserbereiters erst 3 min. nach dem letzten Zapfvorgang möglich ist. Für die Vorrangbehandlung können auch verschiedene Regeln in der Steuereinrichtung des Heißwasserbereiters gespeichert sein, von denen eine als eine eigene Betriebsvorgabe auswählbar ist. Vorteilhafterweise kann die Vorrangbehandlung jedoch nur am Heißwasserbereiter selbst geändert werden, wobei zusätzlich eine Sicherung gegen unbefugtes oder unbeabsichtigtes Verändern der Vorrangbehandlung vorgesehen sein kann.

Weiterhin kann vorgesehen sein, dass die Steuereinrichtung des Heißwasserbereiters während des Betriebs, d.h. solange dem Heißwasserbereiter heißes Wasser entnommen wird, in zeitlichen Abständen den aktuellen Wert einer Betriebsvorgabe sendet und sich die Fernbedienung von selbst ausschaltet, wenn sie eine bestimmte Zeit lang keinen Wert von der Steuereinrichtung des Heißwasserbereiters empfängt, wobei diese Zeitdauer länger ist die Intervalle, in denen die Steuereinrichtung des Heißwasserbereiters die Werte sendet, so dass der Stromverbrauch der Fernbedienung verringert werden kann. Zusätzlich kann vorgesehen sein, dass die Steuereinrichtung des Heißwasserbereiters den neuen Wert für eine Betriebsvorgabe auch dann sendet, wenn die Einstellhandlung am Heißwasserbereiter vorgenommen wurde.

Ein Ausführungsbeispiel der Erfindung ist in den Zeichnungen rein schematisch dargestellt und wird nachfolgend näher beschrieben. Es zeigen
- Fig. 1: einen Heißwasserbereiter mit zugeordneter Fernbedienung zur Durchführung des erfindungsgemäßen Verfahrens und
- Fig. 2: Blockschaltbilder des Heißwasserbereiters und der Fernbedienung.

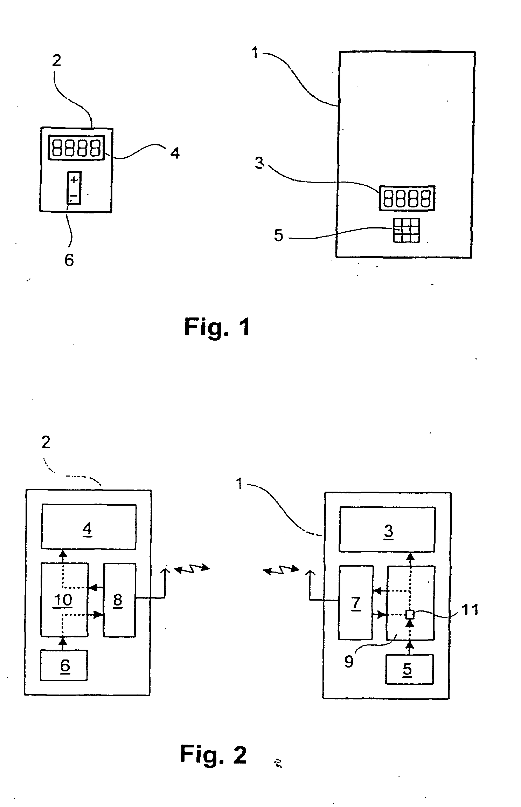

In Fig. 1 ist als Heißwasserbereiter ein elektrischer Durchlauferhitzer 1 dargestellt, der von außen zugänglich eine Anzeige 3 und ein Tastenfeld 5 als Eingabemittel aufweist. Innen und nicht dargestellt weist der Durchlauferhitzer 1 eine Steuereinrichtung 9 auf, die den Betrieb des Durchlauferhitzers 1 entsprechend von Betriebsvorgaben steuert.

Zusätzlich zeigt Fig. 1 eine dem Durchlauferhitzer 1 zugeordnete Fernbedienung 2, die ebenfalls eine Anzeige 4, Eingabemittel in Gestalt eines Wipptasters 6 mit zwei Einschaltfunktionen und innen nicht dargestellt eine Steuereinrichtung 10 aufweist, wobei der Wipptaster 6 auch durch zwei separate Eintaster ersetzt werden kann. Den Steuereinrichtungen 9, 10 des Durchlauferhitzers 1 bzw. der Fernbedienung 2 sind jeweils Datenübertragungseinrichtungen 7, 8 zugeordnet, mit denen die Steuereinrichtungen 9, 10 Daten austauschen können.

Eine Betriebsvorgabe ist die Solltemperatur des Wassers, deren Wert sowohl von der Fernbedienung 2 aus als auch direkt am Durchlauferhitzer 1 eingestellt werden kann. Weiterhin ist eine Vorrangbehandlung vorgesehen, die die Einstellung des Werts für die Solltemperatur anhängig davon regelt, ob die Handlung zum Einstellen der Solltemperatur an der Fernbedienung 2 oder am Durchlauferhitzer 1 vorgenommen worden ist, wobei auch die Zeit seit dem letzten Zapfvorgang berücksichtigt werden kann. Dazu weist die Steuereinrichtung des Durchlauferhitzers 1 eine zur Messung dieser Zeitdauer eingerichtete Zeitmesseinrichtung auf. Für die Vorrangbehandlung sind die folgenden Regeln in der Steuereinrichtung des Durchlauferhitzers 1 hinterlegt und können von einem Benutzer am Heißwasserbereiter 1 ausgewählt werden.
- Solltemperatur ist nur an der Fernbedienung 2 einstellbar
- Solltemperatur ist an der Fernbedienung 2 immer und am Durchlauferhitzer 1 erst 3 min. nach dem letzten Zapfvorgang einstellbar
- Solltemperatur ist am Durchlauferhitzer 1 immer und an der Fernbedienung 2 erst 3 min. nach dem letzten Zapfvorgang einstellbar
- Solltemperatur ist an der Fernbedienung 2 und am Durchlauferhitzer 1 einstellbar

Der Wert für die Solltemperatur und die Regel der Vorrangbehandlung können an dem Tastenfeld 5 des Durchlauferhitzers 1 direkt eingegeben werden. Dazu sind den verschiedenen einstellbaren Regeln für die Vorrangbehandlung jeweils eine Sondertaste des Tastenfelds 5 zugeordnet, wobei für eine Änderung der Regel der Vorrangbehandlung zuvor eine bestimmte Tastenkombination eingegeben werden muss, um eine irrtümliche oder missbräuchliche Änderung zu verhindern. Der Wert für die Solltemperatur wird über Zifferntasten des Tastenfelds 5 eingegeben.

Zur Einstellung der Solltemperatur mittels der Fernbedienung 2 ist der Wipptaster 6 vorgesehen. Dazu sind den beiden Einschaltfunktionen des Wipptasters 6 die beiden Symbole + bzw. - zugeordnet. Ein Betätigen der mit + bezeichneten Einschaltfunktion bewirkt, dass die Solltemperatur erhöht wird. Entsprechend bewirkt das Betätigen der mit - bezeichneten Einschaltfunktion eine Erniedrigung der Solltemperatur.

In Fig. 2 sind Blockschaltbilder des Durchlauferhitzers 1 und der Fernbedienung 2 sowie die Signalwege bei Einstellhandlungen dargestellt. Wird an dem Wipptaster 6 der Fernbedienung 2 die Solltemperatur eingestellt, wird das erzeugte Einstellsignal von der Steuereinrichtung 10 der Fernbedienung 2 zur Datenübertragungseinrichtung 8 geleitet, die dieses Einstellsignal per Funk an eine Datenübertragungseinrichtung 7 des Durchlauferhitzers 1 sendet, worauf das Einstellsignal an die Steuereinrichtung 9 des Durchlauferhitzers 1 geleitet wird. Dort wird das Einstellsignal einer die Vorrangbehandlung ausführenden Vorrangschaltung 11 zugeführt, in der entsprechend der eingestellten Vorrangbehandlung der Wert für die Solltemperatur geändert, dem weiteren Betrieb des Durchlauferhitzers 1 zugrunde gelegt und mittels der Anzeige 3 angezeigt wird.

Zusätzlich wird die geänderte Solltemperatur bzw. Regel der Vorrangbehandlung von der Steuereinrichtung 9 an die Datenübertragungseinrichtung 7 geleitet und von dieser an die Datenübertragungseinrichtung 8 der Fernbedienung 2 per Funk übertragen. Dort wird die übertragene Angabe an die Steuereinrichtung 10 der Fernbedienung 2 geleitet und von dieser mittels der Anzeige 4 angezeigt.

Wird die Einstellhandlung an dem Tastenfeld 5 des Durchlauferhitzers 1 vorgenommen, werden die entsprechenden Einstellsignale direkt zu der Steuereinrichtung 9 des Durchlauferhitzers 1 geleitet und dort wiederum der Vorrangschaltung 11 zugeführt. Anschließend wird wie im vorigen Fall der Wert der Solltemperatur entsprechend der eingestellten Regel geändert, dem weiteren Betrieb zugrunde gelegt, mittels der Anzeige 3 angezeigt und zur Fernbedienung 2 gesendet, damit auch dort der neue Wert für die Solltemperatur angezeigt werden kann. Dabei kann jedoch auch vorgesehen sein, dass die eingestellte Regel der Vorrangbehandlung an die Fernbedienung übertragen und dort angezeigt wird, damit auch der die Fernbedienung gebrauchende Benutzer über die eingestellte Regel der Vorrangbehandlung informiert wird.

Erfindungsgemäß ist es so, dass die Steuereinrichtung 10 der Fernbedienung 2 anhand des von dem Wipptaster 6 erzeugten Einstellsignals selbst den neuen Wert für die Solltemperatur ermittelt und anzeigt. Sobald jedoch die Fernbedienung 2 von der Steuereinrichtung 9 des Durchlauferhitzers 1 den dort ermittelten Wert für die Solltemperatur empfängt, wird dieser von der Anzeige 4 der Fernbedienung 2 angezeigt. Wenn aufgrund eines Fehlers oder einer zu geringen Funkreichweite kein Wert von der Steuereinrichtung 9 des Durchlauferhitzers 1 innerhalb einer bestimmten Zeit nach dem Senden des Einstellsignals von der Steuereinrichtung 10 der Fernbedienung 2 empfangen wird, werden auf der Anzeige 4 als Fehlermeldung vier Striche zum Zeichen eines Fehlers bei der Einstellung der Solltemperatur angezeigt.

## Patentansprüche

1. Verfahren zum Einstellen des Werts einer Betriebsvorgabe eines Heißwasserbereiters (1) mittels einer Fernbedienung (2), wobei der Heißwasserbereiter (1) und die Fernbedienung (2) jeweils eine Steuereinrichtung (9, 10), Eingabemittel (5, 6) und eine Einrichtung zum Senden und Empfangen von Daten (7, 8) und die Fernbedienung (2) zusätzlich Anzeigemittel (4) aufweist, wobei
- die Steuereinrichtung (10) der Fernbedienung (2) ein mittels der Eingabemittel (6) der Fernbedienung (2) erzeugtes Einstellsignal an die Steuereinrichtung (9) des Heißwasserbereiters (1) sendet,
- die Steuereinrichtung (9) des Heißwasserbereiters (1) in Abhängigkeit des Einstellsignals einen neuen Wert für die Betriebsvörgabe ermittelt,
- die Steuereinrichtung (9) des Heißwasserbereiters (1) den ermittelten neuen Wert der Betriebsvorgabe an die Steuereinrichtung (10) der Fernbedienung (2) sendet und
- die Steuereinrichtung (10) der Fernbedienung (2) den empfangenen neuen Wert der Betriebsvorgabe mittels der Anzeigemittel (4) anzeigt, **dadurch gekennzeichnet, dass** die Steuereinrichtung (10) der Fernbedienung (2) für eine Betriebsvorgabe, für die sie seit dem Senden des entsprechenden Einstellsignals für eine bestimmte Zeitdauer keinen Wert von der Steuereinrichtung (9) des Heißwasserbereiters (1) empfangen hat, keinen Wert anzeigt oder eine Fehlermeldung abgibt, wobei auch die Steuereinrichtung (10) der Fernbedienung (2) in Abhängigkeit des mittels der Eingabemittel (6) der Fernbedienung (2) erzeugten Einstellsignals den neuen Wert für die Betriebsvorgabe ermittelt und diesen solange anzeigt bis die Steuereinrichtung (10) der Fernbedienung (2) einen neuen Wert dieser Betriebsvorgabe von der Steuereinrichtung (9) des Heißwasserbereiters (1) empfängt.

2. Verfahren nach Anspruch 1, **dadurch gekennzeichnet, dass** die Steuereinrichtung (9) des Heißwasserbereiters (1) auch ohne den Empfang von Einstellsignalen in zeitlichen Abständen den aktuellen Wert einer Betriebsvorgabe an die Steuereinrichtung (10) der Fernbedienung (2) sendet.

3. Verfahren nach einem der Ansprüche 1 bis 2, **dadurch gekennzeichnet, dass** eine Betriebsvorgabe die Sollwassertemperatur des Heißwasserbereiters (1) ist.

4. Verfahren nach einem der Ansprüche 1 bis 3, **dadurch gekennzeichnet, dass** die Steuereinrichtung (9) des Heißwasserbereiters (1) den neuen Wert für eine Betriebsvorgabe auch in Abhängigkeit von mittels Eingabemittel (5) des Heißwasserbereiters (1) erzeugter Einstellsignale ermittelt.

5. Verfahren nach Anspruch 4, **dadurch gekennzeichnet, dass** die Steuereinrichtung (9) des Heißwasserbereiters (1) entsprechend eines Verfahrens zur Vorrangbehandlung den neuen Wert für eine Betriebsvorgabe auch in Abhängigkeit davon ermittelt, ob die Einstellsignale von der Steuereinrichtung (10) der Fernbedienung (2) gesendet oder mittels der Eingabemittel (5) des Heißwasserbereiters (1) erzeugt wurden.

6. Verfahren nach Anspruch 6, **dadurch gekennzeichnet, dass** die Steuereinrichtung (9) des Heißwasserbereiters (1) den neuen Wert für eine Betriebsvorgabe auch in Abhängigkeit davon ermittelt, wie viel Zeit seit dem letzten Zapfvorgang vergangen ist.

7. Verfahren nach Anspruch 5 oder 6, **dadurch gekennzeichnet, dass** wenigstens zwei verschiedene Verfahren zur Vorrangbehandlung einstellbar sind.

8. Verfharen nach einem der Ansprüche 1 bis 7, **dadurch gekennzeichnet, dass** die Daten zwischen der Steuereinrichtung (10) der Fernbedienung (2) und Steuereinrichtung (9) des Heißwasserbereiters (1) drahtlos übertragen werden.

9. Fernbedienung für einen Heißwasserbereiter, eingerichtet zur Durchführung eines Verfahrens nach einem der Ansprüche 1 bis 8.

## Claims

1. Method of setting the value of an operating default setting of a hot water heater (1) by means of a remote control (2), wherein the hot water heater (1) and the remote control (2) each comprise a control device (9, 10), input means (5, 6) and a device for transmitting and receiving data (7, 8) and the remote control (2) additionally comprises display means (4), wherein
- the control device (10) of the remote control (2) transmits to the control device (9) of the hot water heater (1) a setting signal generated by way of the input means (6) of the remote control (2),
- the control device (9) of the hot water heater (1) determines a new value for the operating default setting in dependence on the setting signal,
- the control device (9) of the hot water heater (1) transmits the determined new value of the operating default setting to the control device (10) of the remote control (2) and
- the control device (10) of the remote control (2) displays the received new value of the operating default setting by way of the display means (4),
**characterised in that** the control device (10) of the remote control (2) displays no value, or delivers a fault report, for an operating default setting for which it has received no value from the control device (9) of the hot water heater (1) for a predetermined period of time since transmission of the corresponding setting signal, wherein in addition the control device (10) of the remote control (2) determines the new value for the operating default setting in dependence on the setting signal generated by way of the input means (6) of the remote control and displays this until the control device (10) of the remote control (2) receives a new value of this operating default setting from the control device (9) of the hot water heater (1).

2. Method according to claim 1, **characterised in that** the control device (9) of the hot water heater (1) transmits the instantaneous value of an operating default setting to the control device (10) of the remote control (2) at intervals in time even without receipt of setting signals.

3. Method according to one of claims 1 and 2, **characterised in that** an operating default setting is the desired water temperature of the hot water heater (1).

4. Method according to any one of claims 1 to 3, **characterised in that** the control device (9) of the hot water heater (1) determines the new value for an operating default setting also in dependence on setting signals generated by way of input means (5) of the hot water heater (1).

5. Method according to claim 4, **characterised in that** the control device (9) of the hot water heater (1) in correspondence with a procedure for priority processing determines the new value for an operating default setting also in dependence on whether the setting signals were transmitted by the control device (10) of the remote control (2) or generated by way of the input means (5) of the hot water heater (1).

6. Method according to claim 5, **characterised in that** the control device (9) of the hot water heater (1) determines the new value for an operating default setting also in dependence on how much time has elapsed since the last dispensing process.

7. Method according to claim 5 or 6, **characterised in that** at least two different procedures for priority processing are settable.

8. Method according to any one of claims 1 to 7, **characterised in that** the data are transmitted wirelessly between the control device (10) of the remote control (2) and the control device (9) of the hot water heater (1).

9. Remote control for a hot water heater equipped for performing a method according to any one of claims 1 to 8.

## Revendications

1. Procédé de réglage de la valeur d'une valeur de consigne d'un chauffe-eau (1) au moyen d'une télécommande (2), dans lequel le chauffe-eau (1) et la télécommande (2) présentent respectivement un dispositif de commande (9, 10), un moyen de saisie (5, 6) et un dispositif pour l'envoi et la réception de données (7, 8) et la télécommande (2) en outre un moyen d'affichage (4), dans lequel
- le dispositif de commande (10) de la télécommande (2) envoie un signal de réglage généré à l'aide du moyen de saisie (6) de la télécommande (2) au dispositif de commande (9) du chauffe-eau (1),
- le dispositif de commande (9) du chauffe-eau (1) détermine en fonction du signal de réglage une nouvelle valeur pour la valeur de consigne,
- le dispositif de commande (9) du chauffe-eau (1) envoie la nouvelle valeur de la valeur de consigne déterminée au dispositif de commande (10) de la télécommande (2) et
- le dispositif de commande (10) de la télécommande (2) affiche la nouvelle valeur de la valeur de consigne reçue à l'aide du moyen d'affichage (4), **caractérisé en ce que** le dispositif de commande (10) de la télécommande (2) n'émet aucune valeur ou un message d'erreur pour une valeur de consigne pour laquelle il n'a reçu depuis l'envoi du signal de réglage correspondant aucune valeur du dispositif de commande (9) du chauffe-eau (1) pendant une période de temps déterminée, dans lequel le dispositif de commande (10) de la télécommande (2) détermine également en fonction du signal de réglage généré à l'aide du moyen de saisie (6) de la télécommande (2) la nouvelle valeur de la valeur de consigne et l'affiche jusqu'à ce que le dispositif de commande (10) de la télécommande (2) reçoive une nouvelle valeur de cette valeur de consigne de la part du dispositif de commande (9) du chauffe-eau (1).

2. Procédé selon la revendication 1, **caractérisé en ce que** le dispositif de commande (9) du chauffe-eau (1) envoie également en l'absence de réception de signaux de réglage selon des écarts temporels déterminés la valeur actuelle d'une valeur de consigne au dispositif de commande (10) de la télécommande (2).

3. Procédé selon l'une des revendications 1 à 2 **caractérisé en ce qu'**une valeur de consigne est la température de consigne pour l'eau du chauffe-eau (1).

4. Procédé selon l'une des revendications 1 à 3, **caractérisé en ce que** le dispositif de commande (9) du chauffe-eau (1) détermine la nouvelle valeur pour une valeur de consigne également en fonction de signaux de réglage générés à l'aide du moyen de saisie (5) du chauffe-eau (1).

5. Procédé selon la revendication 4, **caractérisé en ce que** le dispositif de commande (9) du chauffe-eau (1) détermine selon un procédé de traitement prioritaire la nouvelle valeur d'une valeur de consigne également en fonction du fait de savoir si les signaux de réglage ont été envoyés par le dispositif de commande (10) de la télécommande (2) ou générés à l'aide du moyen de saisie (5) du chauffe-eau (1).

6. Procédé selon la revendication 6, **caractérisé en ce que** le dispositif de commande (9) du chauffe-eau (1) détermine la nouvelle valeur d'une valeur de consigne également en fonction du temps écoulé depuis la dernière consommation d'eau.

7. Procédé selon la revendication 5 ou 6, **caractérisé en ce qu'**au moins deux procédés différents de traitement prioritaire sont réglables.

8. Procédé selon l'une des revendications 1 à 7, **caractérisé en ce que** les données sont transmises sans fil entre le dispositif de commande (10) de la télécommande (2) et le dispositif de commande (9) du chauffe-eau (1).

9. Télécommande pour chauffe-eau, prévue pour la réalisation d'un procédé selon l'une des revendications 1 à 8.
